# FASCICULE DE BREVET EUROPEEN

(11) **EP 0 995 725 B1**
(45) Date de publication et mention de la délivrance du brevet: **03.01.2007**
(21) Numéro de dépôt: 99402586.4
(22) Date de dépôt: 20.10.1999
(51) Int. Cl.: C03C 17/36

(54) **Substrat transparent muni d'un empilement de couches minces**
Transparentes Substrat mit einer Häufung von Schichten
Transparent substrate coated with a stack of thin layers

(30) Priorité: 22.10.1998 FR 9813249
(43) Date de publication de la demande: 26.04.2000
(73) Titulaire: SAINT-GOBAIN GLASS FRANCE, 92400 Courbevoie (FR)
(72) Inventeur: Rondeau, Véronique, 93700 Drancy (FR); Didier, Fabrice, 50679 Köln (DE)
(74) Mandataire: Renous Chan, Véronique

(56) Documents cités:
- EP-A- 0 543 077
- EP-A- 0 718 250
- EP-A- 0 747 330
- DE-A- 19 530 331
- FR-A- 2 641 271

## Description

La présente invention concerne un substrat transparent, notamment en verre, muni d'un empilement de couches minces comportant au moins une couche métallique à propriétés de réflexion dans l'infrarouge notamment bas-émissive, disposée entre deux revêtements à base de matériau diélectrique.

L'application principale visée par l'invention est l'utilisation d'un tel substrat pour la fabrication de vitrages d'isolation thermique et/ou de protection solaire.

Ceux-ci sont destinés à équiper aussi bien les bâtiments que les véhicules et ce, en particulier dans le but de diminuer l'effort de climatisation et/ou réduire une surchauffe excessive entraînée par l'importance toujours croissante des surfaces vitrées dans les pièces et habitacles.

Un type d'empilement de couches minces bien connu pour conférer à un substrat transparent des propriétés thermiques, notamment de bas-émissivité adaptée pour l'application requise précitée, consiste en une couche métallique, notamment en argent, disposée entre deux revêtements à base de matériau diélectrique du type oxyde ou nitrure métallique. Cet empilement est, de manière usuelle, fabriqué à partir d'une succession de dépôts effectués selon une technique utilisant le vide comme par exemple la pulvérisation cathodique, le cas échéant assistée par un champ magnétique.

Il peut être également prévu dans cet empilement une surcouche métallique ayant un rôle de couche de protection afin d'éviter la dégradation de l'argent.

Dans ce type d'empilement, la couche d'argent détermine essentiellement les performances thermiques, anti-solaires et/ou de bas-émissivité du vitrage final, tandis que les couches de matériau diélectrique agissent avant tout sur l'aspect optique du vitrage obtenu de manière interférentielle. En outre, elles ont un rôle de protection de la couche d'argent contre les agressions chimiques et/ou mécaniques.

Jusqu'à ce jour, les améliorations apportées aux vitrages munis d'empilements du type précité ont permis d'augmenter leur champ d'application, tout en leur permettant de conserver un niveau de performances thermiques et optiques satisfaisant. Cependant, sur ce dernier point, l'aspect colorimétrique pourrait être encore amélioré, en particulier avec l'obtention d'une couleur en réflexion plus neutre.

Le but de l'invention est alors de proposer un substrat muni d'un empilement de couches minces du type précité, présentant un aspect colorimétrique amélioré, notamment avec une couleur en réflexion plus neutre.

Pour ce faire, l'invention a pour objet un substrat transparent, notamment en verre,selon la revendication 1. Ce substrat est muni d'un empilement de couches minces comportant au moins une couche métallique à propriétés de réflexion dans l'infrarouge, notamment bas-émissive, disposée entre deux revêtements à base de matériau diélectrique.

Selon l'invention, le revêtement à base de matériau diélectrique au-dessus de la couche métallique comporte la séquence de couches déposées dans l'ordre suivant :
a) couche(s) à matériau(x) d'indice de réfraction nᵢ₋₂ d'au plus 2,2 ;
b) couche(s) à matériau(x) d'indice de réfraction nᵢ₋₁ inférieur d'au moins 0,3 à celui de la ou les dernière(s) couche(s) nᵢ ;
c) dernière(s) couche(s) à matériau(x) d'indice de réfraction nᵢ sensiblement égal à nᵢ₋₂.

On précise que, dans le cadre de l'invention il faut comprendre par « dernière(s) couche(s) de l'empilement » la ou les couche(s) de l'empilement la ou les plus éloignée(s) du substrat, qui comprend celle directement en contact avec le milieu ambiant, tel que l'air.

La solution selon l'invention procure un résultat avantageux, mais aussi très inattendu.

En effet, jusqu'à présent, pour avoir un effet anti-reflets notable pour le type d'empilement visé par l'invention, on cherchait nécessairement à obtenir un revêtement supérieur à base de matériaux diélectriques dans lequel la couche directement en contact avec la couche métallique de protection était une couche à base d'un matériau à haut indice de réfraction, matériau qui présentait l'avantage « d'anti-refléter » la couche métallique à propriétés de réflexion dans l'infrarouge. Ce revêtement supérieur était, de préférence terminé par un « gradient d'indice » avec une dernière couche en contact avec le milieu ambiant tel que l'air, d'indice de réfraction le plus proche de ce dernier, de l'ordre de 1,7.

Cela se justifiait par le fait que la réflexion à l'interface entre la dernière couche de l'empilement et l'air est d'autant plus faible que la différence d'indice entre le matériau et l'air est faible.

De manière surprenante, il s'est avéré que pour le type d'empilement visé par l'invention, l'effet anti-reflets recherché était atteint malgré la présence d'une dernière couche à haut indice de réfraction en contact avec le milieu ambiant tel que l'air, en utilisant la séquence conforme à l'invention.

Et, par voie de conséquence, les substrats munis de l'empilement conforme à l'invention présentent une couleur en réflexion neutre, même dans les configurations où la couche fonctionnelle métallique, telle que l'argent a une épaisseur géométrique importante.

Les vitrages obtenus en incorporant de tels substrats sont donc à la fois très esthétiques et très performants d'un point de vue thermique.

Les avantages qui découlent de la séquence de l'empilement conforme à l'invention, sont nombreux par rapport aux séquences selon l'état de l'art, selon lesquelles un gradient d'indice est nécessaire pour obtenir une couleur en réflexion satisfaisante.

En effet, du fait que conformément à l'invention, la dernière couche a un indice de réfraction élevé, il est possible de choisir aisément un matériau constitutif de celle-ci qui améliore considérablement la durabilité mécanique de l'empilement tel qu'un matériau à base de SnZnOₓ, ou qui lui confère un caractère « trempable » sans modification de ses propriétés, tel qu'un matériau à base de Si₃N₄.

La couche métallique fonctionnelle est avantageusement en argent. Son épaisseur peut être choisie entre 7 et 20 nanomètres, notamment entre 9 et 15 nanomètres, quand on désire obtenir des vitrages à basse émissivité et haute transmission lumineuse (notamment une T_{L} d'au moins 70 à 80%), particulièrement pour ceux destinés à équiper des bâtiments dans des pays froids. Quand on désire des vitrages à fonction anti-solaire, réfléchissants, destinés plutôt à équiper des bâtiments dans des pays chauds, la couche d'argent peut être plus épaisse, par exemple comprise entre 20 et 25 nm (ce qui a évidemment pour conséquence d'avoir des vitrages à transmission lumineuse nettement plus faible, par exemple inférieure à 60%).

De manière préférée, il peut être prévu que l'empilement selon l'invention, comporte une couche métallique de protection placée immédiatement au-dessus et au contact de la couche à propriétés de réflexion dans l'infrarouge.

La couche de protection prévue est avantageusement à base d'un métal unique choisi parmi le niobium Nb, le titane Ti, le chrome Cr, ou le nickel Ni ou un alliage à partir d'au moins deux de ces métaux, notamment d'un alliage de niobium et de chrome (Nb/Cr) ou de nickel et de chrome (Ni/Cr) et a une épaisseur géométrique inférieure ou égale à 2 nanomètres. Selon cette variante, le métal ou l'alliage constitutif de la couche peut être dopé au palladium Pd. Elle joue son rôle de couche « sacrificielle » dans le but de protéger la couche fonctionnelle en cas de dépôt de la couche suivante par pulvérisation réactive.

Le revêtement à base de matériau diélectrique, situé en dessous de la couche métallique à propriétés de réflexion dans l'infrarouge est de préférence une superposition d'au moins deux couches, notamment deux couches en oxyde métallique ou une couche en nitrure comme AlN, Si₃N₄ et une couche en oxyde métallique comme ZnO, SnO₂, TiO₂. Il y a de préférence un contact direct entre ce revêtement en diélectrique et la couche métallique à propriétés dans l'infrarouge. Ce revêtement comporte avantageusement une couche de mouillage à base d'oxyde de zinc ZnO, éventuellement dopé à l'aluminium ZnO:Al, au contact de ladite couche à propriétés de réflexion dans l'infrarouge, ce revêtement comporte alors avantageusement deux couches, dont cette couche de mouillage. L'épaisseur géométrique de la couche de mouillage est de préférence comprise entre 5 et 40 nanomètres, notamment entre 15 et 30 nanomètres. Avec de telles épaisseurs, elle peut contribuer, outre sa fonction de mouillage, à ajuster l'aspect optique de l'empilement en association avec le premier revêtement en matériau diélectrique situé au-dessus de la couche fonctionnelle. Avantageusement, la couche de mouillage peut être à base d'oxyde de zinc partiellement cristallisé.

Une telle couche permet de ne pas pénaliser l'empilement d'un point de vue optique en cas de traitement thermique subi par le substrat porteur du type bombage ou trempe.

Selon une caractéristique très avantageuse de l'intention, la ou les dernière(s) couche(s) de l'empilement peut (peuvent) être en outre une couche d'oxyde métallique choisie parmi l'un des matériaux suivants : oxyde d'étain SnO₂, oxyde de zinc, oxyde mixte d'étain et de zinc SnZnOₓ. Elle peut être également une couche de nitrure métallique, éventuellement barrière à la diffusion de l'oxygène choisie parmi l'un des matériaux suivants : nitrure de silicium Si₃N₄, éventuellement dopé à l'aluminium Si₃N₄:Al, nitrure d'aluminium AlN.

Elle peut être enfin une couche de carbure, éventuellement barrière à la diffusion de l'oxygène, choisie parmi l'un des matériaux suivants : SiC, TiC, CrC, TaC.

Comme mentionné ci-dessus, une telle couche permet d'améliorer la durabilité de l'empilement et/ou de conférer à celui-ci un caractère « trempable ».

Cette dernière couche a de préférence une épaisseur géométrique comprise entre 5 et 20 nanomètres. Avantageusement, la couche placée immédiatement en dessous et au contact d'une des dernières couches de l'empilement présente un indice de réfraction nᵢ₋₁ inférieure à 1,75.

Cette couche est de préférence à base d'oxyde de silicium SiO₂ ou d'oxyde d'aluminium Al₂O₃ ou d'un mélange de ces deux oxydes Al₂O₃:SiO₂.

A titre d'illustration préférée, l'empilement de couches répondant aux critères de l'invention est du type :
Verre/SnO₂ ou Si₃N₄:Al ou AlN/ZnO ou ZnO:Al/Ag/Ti ou
NiCr/ZnO ou SnO₂/SiO₂ ou Al₂O₃ ou SiO₂:Al₂O₃/SnO₂ ou ZnO ou
SnZnOₓ ou AlN ou Si₃N₄:Al ou (AlN/Si₃N₄:Al) ou (Si₃N₄:Al/AlN) ou
(SnO₂/SnZnOₓ)

Le substrat conforme à l'invention est également remarquable en ce qu'il présente une émissivité ε d'au plus 0,05.

L'invention qui vient d'être décrite est susceptible de nombreuses applications. Elle a trait notamment à un vitrage multiple bas-émissif ou anti-solaire, notamment au double vitrage, comportant le substrat précédemment défini, l'empilement de couches étant en faces 2 et/ou 3, et le cas échéant en face 5.

Elle concerne également un double vitrage bas-émissif ou anti-solaire comportant au moins un substrat précédemment défini remarquable par le fait qu'il présente une transmission lumineuse T_{L} d'au moins 72%.

Un tel double vitrage comportant deux feuilles de verre est également remarquable en ce qu'il présente un coefficient K inférieur ou égal à 1,4W/K.m² lorsque les deux feuilles de verre sont séparées par une lame d'air ou inférieur ou égal à 1,1W/K.m² lorsque les feuilles de verre sont séparées par une lame d'argon.

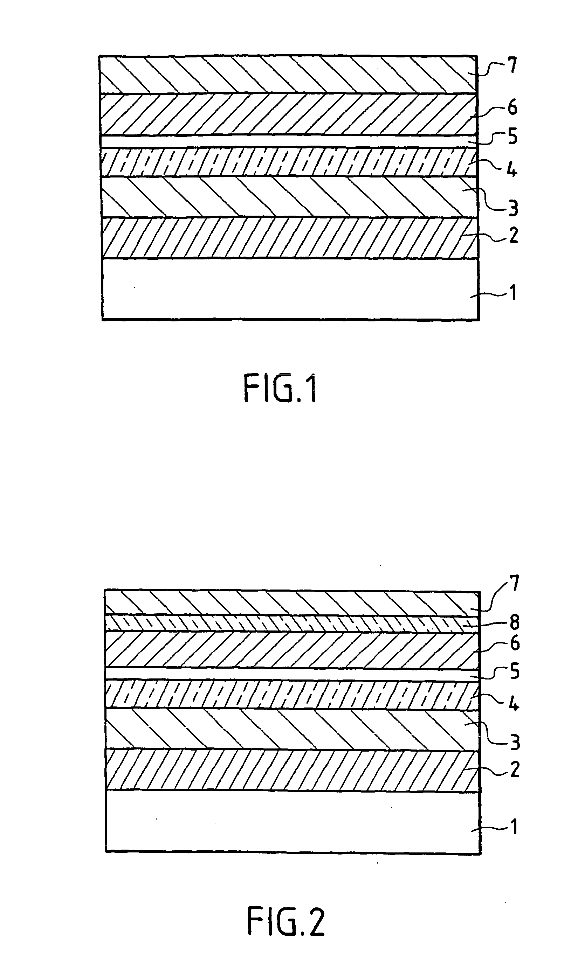

D'autres détails et caractéristiques avantageuses ressortiront ci-après à la lecture de la description détaillée des exemples suivants non limitatifs faite en référence aux figures 1 et 2.

L'exemple 1 est un exemple comparatif.

L'exemple 2 est réalisé conformément à l'invention.

Dans ces deux exemples, les dépôts successifs des couches minces ont été réalisés à l'aide d'une technique de pulvérisation cathodique assistée par champ magnétique. Bien évidemment, dans le cadre de l'invention, ils peuvent être réalisés par toute autre technique permettant une bonne maîtrise des épaisseurs de couches obtenues.

Les substrats sur lesquels ont été déposés les empilements de couches minces sont des substrats en verre silico-sodo-calcique clair du type de ceux commercialisés par la société SAINT-GOBAIN VITRAGE sous la dénomination PLANILUX.

### EXEMPLE 1 - (COMPARATIF)

Sur la figure 1, on voit que le substrat 1 est surmonté, conformément à ce qui a été décrit dans la demande de brevet EP-0 718 250, d'une couche barrière 2 à la diffusion de l'oxygène et des ions Na⁺, à base de SnO₂, d'une couche 3 de mouillage à base d'oxyde de zinc ZnO, puis d'une couche 4 en argent, d'une couche 5 de protection en titane Ti, d'une couche 6 à base d'oxyde de zinc ZnO et enfin, d'une couche 7 barrière à l'oxygène à base de Si₃N₄. On précise que par souci de clarté, les différentes proportions entre les épaisseurs des matériaux n'ont pas été respectées.

L'empilement est donc du type :
Verre/SnO₂/ZnO/Ag/Ti/ZnO/Si₃N₄

Le tableau 1 ci-dessous indique l'épaisseur en nanomètres, correspondant à chaque couche de l'empilement, surmontant le substrat de 4 mm d'épaisseur :

**TABLEAU 1**

| | | |
|---|---|---|
| SnO₂ | (2) | 17 |
| ZnO | (3) | 12 |
| Ag | (4) | 12 |
| Ti | (5) | 1,2 |
| ZnO | (6) | 27 |
| Si₃N₄ | (7) | 20 |

Pour réaliser cet empilement, les conditions de dépôt pour chacune des couches préconisées ont été les suivantes :
⇒ La couche 2 à base de SnO₂ a été déposée à l'aide d'une cible d'étain, sous une pression de 1,5 x 10⁻³ mbar, dans une atmosphère argon/O₂,
⇒ Les couches 3 et 6 à base d'oxyde de zinc ZnO ont été déposées à l'aide d'une cible en zinc, sous une pression de 8 x 10⁻³ mbar, dans une atmosphère d'argon/oxygène,
⇒ La couche 4 en argent a été déposée à l'aide d'une cible en argent, sous une pression de 8 x 10⁻³ mbar, dans une atmosphère d'argon,
⇒ La couche 5 en Ti a été déposée à l'aide d'une cible en titane, sous une pression de 8 x 10⁻³ mbar, dans une atmosphère d'argon.
⇒ La couche 7 en Si₃N₄ a été déposée à l'aide d'une cible en silicium dopé à 8% d'aluminium, sous une pression de 8 x 10⁻³ mbar, dans une atmosphère d'argon/azote.

Les puissances et vitesses de défilement du substrat ont été ajustées de manière connue en soi pour obtenir les épaisseurs désirées ci-dessus.

Le tableau 2 ci-dessous indique respectivement la valeur de transmission lumineuse T_{L} en pourcentage, la valeur de réflexion lumineuse R_{L} également en pourcentage, les valeurs de a*® et b*®, en réflexion dans le système de colorimétrie (L, a*, b*), sans unité, ainsi que la valeur d'émissivité ε, sans unité. Toutes les mesures sont faites en référence à l'illuminant D₆₅.

### TABLEAU 2

### EXEMPLE 1 - (substrat 1 monolithique)

| | |
|---|---|
| T_{L} | 83,1 |
| R_{L} | 9,34 |
| a*® | 2,5 |
| b*® | - 12,9 |
| ε | 0,032 |

Le substrat 1 précédemment défini est ensuite monté en double vitrage avec un autre substrat de verre clair nu d'épaisseur géométrique égale à 4 mm avec une lame intercalaire d'argon de 15 mm d'épaisseur, l'empilement de couches minces étant en face 3.

Le tableau 3 ci-dessous reprend les mêmes caractéristiques T_{L}, R_{L}, a*®, b*®, ε ainsi que la valeur du coefficient K en W/K.m² du double

### TABLEAU 3

### EXEMPLE 1 - (double vitrage)

| | |
|---|---|
| T_{L} | 75,6 |
| R_{L} | 15,6 |
| a*® | 0,5 |
| b*® | - 7,7 |
| ε | 0,032 |
| K | 1,09 |

### EXEMPLE 2 - (SELON L'INVENTION)

L'empilement de couches minces représenté sur la figure 2 est identique à celui de l'exemple 1 comparatif, à ceci près qu'une couche 8 à base de SiO₂ d'indice de réfraction égal à 1,45 est déposée entre la couche 6 à base d'oxyde de zinc ZnO et la dernière couche de l'empilement 7 à base de nitrure de silicium Si₃N₄.

L'empilement a donc la séquence suivante :
Verre/SnO₂/ZnO/Ag/Ti/ZnO/SiO₂/Si₃N₄

La couche 8 à base de SiO₂ conforme à l'invention a une épaisseur de 17 nm. Les autres couches ont les mêmes épaisseurs que celles relatives à l'exemple 1 comparatif, sauf celle de l'épaisseur de la surcouche Si₃N₄ qui est égale ici à 12 nm.

Cette couche 8 à base de SiO₂ a été déposée par pulvérisation réactive assistée par plasma dans une atmosphère d'argon/oxygène a une pression d'environ 1,5 x 10⁻³ mbar.

Le tableau 4 ci-dessous indique respectivement les valeurs T_{L}, R_{L} a*®, b*® et ε du substrat 1 monolithique relatif à cet exemple.

### TABLEAU 4

### EXEMPLE 2 - (monolithique)

| | |
|---|---|
| T_{L} | 82,8 |
| R_{L} | 9,3 |
| a*® | 3,0 |
| b*® | -6,0 |
| ε | 0,032 |

Ce substrat 1 est ensuite monté au double vitrage avec un autre substrat de verre clair de même épaisseur, égale à 4 mm avec une lame intercalaire d'argon de 15 mm, l'empilement suivant l'invention étant en face 3 de ce double vitrage.

Le tableau 5 ci-dessous reprend les mêmes caractéristiques T_{L}, R_{L}, a*®, b*®, ε ainsi que la valeur du coefficient K en W/K.m² du double vitrage.

### TABLEAU 5

### EXEMPLE 2 - (double vitrage)

| | |
|---|---|
| T_{L} | 75,3 |
| R_{L} | 15,7 |
| a*® | 0,9 |
| b*® | - 3,3 |
| ε | 0,032 |
| K | 1,09 |

En comparant les différents tableaux relatifs aux valeurs spectrophotométriques et aux performances thermiques respectivement de l'exemple comparatif selon l'état de l'art et l'exemple selon l'invention, on peut constater aisément que :
⇒ l'empilement conforme à l'invention confère au substrat verrier un meilleur aspect colorimétrique, avec une couleur en réflexion plus neutre, ce qui est corroboré par des valeurs de a* et b* très faibles,
⇒ cette amélioration sur le plan optique ne s'est pas faite au détriment des performances thermiques.

En outre, les tests de durabilité mécanique ont prouvé que l'empilement selon l'invention présentait une plus grande durabilité.

Enfin, l'empilement selon l'invention est apte à subir des traitements thermiques du type bombage et/ou trempe sans se dégrader.

## Revendications

1. Substrat transparent, notamment en verre, muni d'un empilement de couches minces comportant au moins une couche métallique à propriétés de réflexion dans l'infrarouge, notamment bas-émissive, disposée entre deux revêtements à base de matériau diélectrique, le revêtement à base de matériau diélectrique situé en dessous de la couche métallique à propriétés de réflexion dans l'infrarouge étant une superposition d'au moins deux couches, **caractérisé en ce que** le revêtement à base de matériau diélectrique au-dessus de la couche métallique comporte la séquence de couches déposées dans l'ordre suivant :
a) couche(s) à matériau(x) d'indice de réfraction nᵢ₋₂ élevé, de l'ordre de 2 et d'au plus 2,2 ;
b) couche(s) à matériau(x) d'indice de réfraction nᵢ₋₁ inférieur d'au moins 0,3 à celui de la ou les dernière(s) couche(s) nᵢ ;
c) dernière(s) couche(s) à matériau(x) d'indice de réfraction nᵢ élevé sensiblement égal à nᵢ₋₂.

2. Substrat selon la revendication 1, **caractérisé en ce que** la couche métallique à propriétés de réflexion dans l'infrarouge est à base d'argent Ag.

3. Substrat selon la revendication 1 ou 2, **caractérisé en ce que** la couche métallique à propriétés de réflexion dans l'infrarouge est directement en contact avec le revêtement à base de matériau diélectrique sous-jacent.

4. Substrat selon l'une des revendications 1 à 3, **caractérisé en ce que** la couche métallique à propriétés de réflexion dans l'infrarouge a une épaisseur géométrique comprise entre 7 et 20 nanomètres, notamment entre 9 et 15 nanomètres de manière à lui conférer des propriétés de bas-émissivité ou comprise entre 20 et 25 nanomètres de manière à lui conférer des propriétés anti-solaires.

5. Substrat selon l'une des revendications précédentes, **caractérisé en ce qu'**il comporte une couche métallique de protection placée immédiatement au-dessus et au contact de la couche à propriétés de réflexion dans l'infrarouge.

6. Substrat selon la revendication 5, **caractérisé en ce que** ladite couche métallique de protection est à base d'un métal unique choisi parmi le niobium Nb, le titane Ti, le chrome Cr ou le nickel Ni ou d'un alliage d'au moins deux de ces métaux, notamment d'un alliage de niobium et de chrome (Nb/Cr) ou de nickel et de chrome (Ni/Cr) **et en ce qu**'elle a une épaisseur géométrique de préférence inférieure ou égale à 2 nanomètres.

7. Substrat selon l'une des revendications précédentes, **caractérisé en ce que** le revêtement à base de matériau diélectrique situé en dessous de la couche métallique à propriétés de réflexion dans l'infrarouge est une superposition d'au moins deux couches qui sont deux couches en oxyde métallique ou une couche en nitrure comme AIN, Si₃N₄ et une couche en oxyde métallique comme ZnO, SnO₂, TiO₂ avec de préférence un contact direct entre ce revêtement en diélectrique et la couche métallique à propriétés dans l'infrarouge.

8. Substrat selon la revendication 7, **caractérisé en ce que** le revêtement à base de matériau diélectrique, situé en dessous de la couche métallique à propriétés de réflexion dans l'infrarouge, comporte une couche de mouillage à base d'oxyde de zinc ZnO, éventuellement dopé à l'aluminium ZnO:Al, au contact de ladite couche à propriétés de réflexion dans l'infrarouge, le revêtement comprenant de préférence deux couches dont cette couche de mouillage.

9. Substrat selon la revendication 8, **caractérisé en ce que** ladite couche de mouillage a une épaisseur géométrique comprise entre 5 et 40 nanomètres, notamment entre 15 et 30 nanomètres.

10. Substrat selon l'une des revendications 8 ou 9, **caractérisé en ce que** la couche de mouillage est à base d'oxyde de zinc au moins en partie cristallisé.

11. Substrat selon l'une quelconque des revendications précédentes, **caractérisé en ce que** la dernière couche de l'empilement est une couche choisie parmi l'un des matériaux suivants : nitrure de silicium Si₃N₄, éventuellement dopé à l'aluminium Si₃N₄:Al, nitrure d'aluminium AlN, oxyde d'étain SnO₂, oxyde mixte d'étain et de zinc SnZnOₓ, carbures tels que SiC, TiC, CrC, TaC.

12. Substrat selon l'une quelconque des revendications précédentes, **caractérisé en ce que** la dernière couche de l'empilement a une épaisseur géométrique comprise entre 5 et 20 nanomètres.

13. Substrat selon l'une quelconque des revendications précédentes, **caractérisé en ce que** la couche placée immédiatement en dessous et au contact de la (des) dernière(s) couche(s) de l'empilement présente un indice de réfraction nᵢ₋₁ inférieur à 1,75.

14. Substrat selon l'une quelconque des revendications précédentes, **caractérisé en ce que** la couche placée immédiatement en dessous et au contact de la (des) dernière(s) couche(s) est à base d'oxyde de silicium SiO₂ ou d'oxyde d'aluminium Al₂O₃ ou d'un mélange de ces deux oxydes Al₂O₃:SiO₂.

15. Substrat selon l'une quelconque des revendications précédentes, **caractérisé en ce que** l'empilement est le suivant :
Verre/SnO₂ ou Si₃N₄:Al ou AIN/ZnO ou ZnO:Al/Ag/Ti ou
NiCr/ZnO ou SnO₂/SiO₂ ou Al₂O₃ ou SiO₂:Al₂O₃/SnO₂ ou ZnO ou
SnZnOₓ ou AIN ou Si₃N₄:Al ou (AlN/Si₃N₄:Al) ou (Si₃N₄:Al/AlN) ou
(SnO₂/SnZnOₓ)

16. Substrat selon l'une quelconque des revendications précédentes, **caractérisé en ce qu'**il présente une émissivité ε d'au plus 0,05.

17. Vitrage multiple bas-émissif ou anti-solaire, notamment double vitrage, comportant le substrat selon l'une quelconque des revendications précédentes, l'empilement de couches minces étant en faces 2 et/ou 3, et le cas échéant en face 5.

18. Double vitrage bas-émissif comportant au moins un substrat selon l'une quelconque des revendications 1 à 16, **caractérisé en ce qu'**il présente une transmission lumineuse T_{L} d'au moins 72%.

19. Double vitrage selon la revendication 18 comportant deux feuilles de verre, **caractérisé en ce qu'**il présente un coefficient K inférieur ou égal à 1,4W/K.m² lorsque les deux feuilles de verre sont séparées par une lame d'air, ou inférieur ou égal à 1,1W/K.m² lorsque les deux feuilles de verre sont séparées par une lame d'argon.

## Claims

1. Transparent substrate, in particular made of glass, provided with a thin-film stack including at least one metallic layer with infrared reflection properties, in particular a low-emissivity layer, arranged between two dielectric-based coatings, the dielectric-based coating lying underneath the metallic layer with infrared reflection properties being a superposition of at least two layers, **characterized in that** the dielectric-based coating arranged above the metallic layer has the sequence of layers deposited in this order:
a) layer(s) with material(s) with high refractive index nᵢ₋₂, of the order of 2 and of at most 2.2;
b) layer(s) with material(s) with refractive index nᵢ₋₁ at least 0.3 less than that of the last layer(s) nᵢ;
c) last layer(s) with material(s) with high refractive index nᵢ substantially equal to nᵢ₋₂.

2. Substrate according to Claim 1, **characterized in that** the metallic layer with infrared reflection properties is based on silver Ag.

3. Substrate according to Claim 1 or 2, **characterized in that** the metallic layer with infrared reflection properties is directly in contact with the underlying dielectric-based coating.

4. Substrate according to one of Claims 1 to 3, **characterized in that** the metallic layer with infrared reflection properties has a geometrical thickness of between 7 and 20 nanometers in particular between 9 and 15 nanometers, so as to give it low-emissivity properties, or between 20 and 25 nanometers so as to give it solar-protection properties.

5. Substrate according to one of the preceding claims, **characterized in that** it has a protective metallic layer placed immediately above and in contact with the layer with infrared reflection properties.

6. Substrate according to Claim 5, **characterized in that** the said protective metallic layer is based on a single metal selected from niobium Nb, titanium Ti, chromium Cr or nickel Ni or an alloy of at least two of these metals, in particular an alloy of niobium and chromium (Nb/Cr) or of nickel and chromium (Ni/Cr), **and in that** it has a geometrical thickness of preferably less than or equal to 2 nanometers

7. Substrate according to any one of the preceding claims, **characterized in that** the dielectric-based coating lying underneath the metallic layer with infrared reflection properties is a superposition of at least two layers, which are two metallic oxide layers or a nitride layer like AIN or Si₃N₄ and a metallic oxide layer like SnO₂, ZnO, TiO₂, with preferably a direct contact between the said coating and the said metallic layer with infrared reflection properties.

8. Substrate according to claim 7 **characterized in that** the dielectric based coating underneath the metallic layer with infrared reflection properties has a wetting layer based on zinc oxide ZnO, optionally doped with aluminium ZnO:Al, in contact with the said layer with infrared reflection properties, and comprises preferably two layers including the said wetting layer.

9. Substrate according to Claim 8, **characterized in that** the wetting layer has a geometrical thickness of between 5 and 40 nanometers, in particular between 15 and 30 nanometers.

10. Substrate according to one of Claims 8 and 9, **characterized in that** the wetting layer is based on at least partly crystallized zinc oxide.

11. Substrate according to any one of the preceding claims, **characterized in that** the last layer in the stack is a layer selected from one of the following materials: silicon nitride Si₃N₄, optionally doped with aluminium Si₃N₄:Al, aluminium nitride AIN, tin oxide SnO₂, mixed oxide of tin and zinc SnZnOₓ, and carbides such as SiC, TiC, CrC, TaC.

12. Substrate according to any one of the preceding claims, **characterized in that** the last layer in the stack has a geometrical thickness of between 5 and 20 nanometers.

13. Substrate according to any one of the preceding claims,
**characterized in that** the layer placed immediately underneath and in contact with the last layer in the stack has a refractive index nᵢ₋₁ of less than 1.75.

14. Substrate according to any one of the preceding claims, **characterized in that** the layer placed immediately underneath and in contact with the last layer is based on silicon oxide SiO₂ or aluminium oxide Al₂O₃ or a mixture of these two oxides Al₂O₃:SiO₂.

15. Substrate according to any one of the preceding claims, **characterized in that** the stack is as follows:
Glass/SnO₂ or Si₃N₄:Al or AlN/ZnO or ZnO:Al/Ag/Ti or
NiCr/ZnO or SnO₂/SiO₂ or Al₂O₃ or SiO₂:Al₂O₃/SnO₂ or ZnO or
SnZnOₓ or AIN or Si₃N₄:Al or (AlN/Si₃N₄:Al) or (Si₃N₄:Al/AlN) or
(SnO₂/SnZnOₓ)

16. Substrate according to any one of the preceding claims, **characterized in that** it has an emissivity ε of at most 0.05.

17. Low-emission or solar-protection multiple glazing, in particular double glazing, having the substrate according to any one of the preceding claims, the thin-film stack being at faces 2 and/or 3, and where appropriate, at face 5.

18. Low-emissivity double glazing having at least one substrate according to any one of Claims 1 to 16 **characterized in that** it has an optical transmission T_{L} of at least 72%.

19. Double glazing according to Claim 18, having two panes of glass, **characterized in that** it has a coefficient K less than or equal to 1.4 W/K.m² when the two panes of glass are separated by a layer of air, or less than or equal to 1.1 W/K.m² when the two panes of glass are separated by a layer of argon.

## Patentansprüche

1. Transparentes Substrat, das aus speziell Glas besteht, und welches mit einem Aufbau aus dünnen Schichten versehen ist, der mindestens eine insbesondere niedrig emittierende Metallschicht mit Reflexionseigenschaften im Infrarot umfasst, die zwischen zwei Beschichtungen auf der Basis eines dielektrischen Materials angeordnet ist, wobei die Beschichtung auf der Basis eines dielektrischen Materials, die sich unter der Metallschicht mit Reflexionseigenschaften im Infrarot befindet, eine Übereinanderanordnung von mindestens zwei Schichten ist, **dadurch gekennzeichnet, dass** die Beschichtung auf der Basis eines dielektrischen Materials, die sich auf der Metallschicht befindet, die Abfolge von in folgender Reihenfolge aufgebrachten Schichten umfasst:
a) Schicht(en) aus (einem) Material(ien) mit einem hohen Brechungsindex nᵢ₋₂ von etwa 2 und höchstens 2,2,
b) Schicht(en) aus (einem) Material(ien) mit einem Brechungsindex nᵢ₋₁, der um mindestens 0,3 kleiner als derjenige nᵢ der letzten Schicht(en) ist, und
c) letzte Schicht(en) aus (einem) Material(ien) mit einem hohen Brechungsindex nᵢ von etwa gleich nᵢ₋₂.

2. Substrat nach Anspruch 1, **dadurch gekennzeichnet, dass** die Metallschicht mit Reflexionseigenschaften im Infrarot auf der Basis von Silber, Ag, ist.

3. Substrat nach Anspruch 1 oder 2, **dadurch gekennzeichnet, dass** die Metallschicht mit Reflexionseigenschaften im Infrarot sich mit der darunter befindlichen Beschichtung auf der Basis eines dielektrischen Materials in direkter Berührung befindet.

4. Substrat nach einem der Ansprüche 1 bis 3, **dadurch gekennzeichnet, dass** die geometrische Dicke der Metallschicht mit Reflexionseigenschaften im Infrarot 7 bis 20 Nanometer und insbesondere zwischen 9 und 15 Nanometer derart beträgt, dass ihr niedrig emittierende Eigenschaften verliehen werden, oder 20 bis 25 Nanometer derart beträgt, dass ihr Sonnenschutzeigenschaften verliehen werden.

5. Substrat nach einem der vorhergehenden Ansprüche, **dadurch gekennzeichnet, dass** es eine metallische Schutzschicht umfasst, die unmittelbar auf und im Kontakt mit der Schicht mit Reflexionseigenschaften im Infrarot angeordnet ist.

6. Substrat nach Anspruch 5, **dadurch gekennzeichnet, dass** die metallische Schutzschicht auf der Basis eines einzigen Metalls, das aus Niob, Nb, Titan, Ti, Chrom, Cr, bzw. Nickel, Ni, ausgewählt ist, oder einer Legierung aus mindestens zwei dieser Metalle, insbesondere einer Niob-Chrom-Legierung (Nb/Cr) bzw. Nickel-Chrom-Legierung (Ni/Cr), ist, **und dass** ihre geometrische Dicke vorzugsweise weniger als oder gleich 2 Nanometer beträgt.

7. Substrat nach einem der vorhergehenden Ansprüche, **dadurch gekennzeichnet, dass** die Beschichtung auf der Basis eines dielektrischen Materials, die sich unter der Metallschicht mit Reflexionseigenschaften im Infrarot befindet, eine Übereinanderanordnung von mindestens zwei Schichten ist, die zwei Metalloxidschichten sind, oder eine Nitridschicht wie aus AlN, Si₃N₄ und eine Schicht aus einem Metalloxid wie ZnO, SnO₂, TiO₂ sind, mit vorzugsweise einem direkten Kontakt zwischen dieser aus einem Dielektrikum bestehenden Beschichtung und der Metallschicht mit Eigenschaften im Infrarot.

8. Substrat nach Anspruch 7, **dadurch gekennzeichnet, dass** die Beschichtung auf der Basis eines dielektrischen Materials, die sich unter der Metallschicht mit Reflexionseigenschaften im Infrarot befindet, eine Haftschicht auf der Basis von Zinkoxid, ZnO, das gegebenenfalls mit Aluminium dotiert ist, ZnO:Al, die sich in Berührung mit der Schicht mit Reflexionseigenschaften im Infrarot befindet, enthält, wobei die Beschichtung vorzugsweise zwei Schichten, davon eine diese Haftschicht, umfasst.

9. Substrat nach Anspruch 8, **dadurch gekennzeichnet, dass** die geometrische Dicke der Haftschicht 5 bis 40 Nanometer und insbesondere zwischen 15 und 30 Nanometer beträgt.

10. Substrat nach Anspruch 8 oder 9, **dadurch gekennzeichnet, dass** die Haftschicht auf der Basis von wenigstens teilweise kristallisiertem Zinkoxid ist.

11. Substrat nach einem der vorhergehenden Ansprüche, **dadurch gekennzeich-net, dass** die letzte Schicht des Aufbaus eine Schicht ist, die aus einem der folgenden Materialien ausgewählt ist: Siliciumnitrid, Si₃N₄, gegebenenfalls mit Aluminium dotiert, Si₃N₄:Al, Aluminiumnitrid, AlN, Zinnoxid, SnO₂, Zinn-Zink-Mischoxid, SnZnOₓ, und Carbide wie SiC, TiC, CrC und TaC.

12. Substrat nach einem der vorhergehenden Ansprüche, **dadurch gekennzeichnet, dass** die geometrische Dicke der letzten Schicht des Aufbaus 5 bis 20 Nanometer beträgt.

13. Substrat nach einem der vorhergehenden Ansprüche, **dadurch gekennzeichnet, dass** der Brechungsindex nᵢ₋₁ der Schicht, die unmittelbar unter und im Kontakt mit der (den) letzten Schicht(en) des Aufbaus angeordnet ist, weniger als 1,75 beträgt.

14. Substrat nach einem der vorhergehenden Ansprüche, **dadurch gekennzeichnet, dass** die Schicht, die unmittelbar unter und im Kontakt mit der (den) letzten Schicht(en) angeordnet ist, auf der Basis von Siliciumoxid, SiO₂, Aluminiumoxid, Al₂O₃, oder einem Gemisch aus diesen beiden Oxiden, Al₂O₃:SiO₂, ist.

15. Substrat nach einem der vorhergehenden Ansprüche, **dadurch gekennzeichnet, dass** der Aufbau Folgender ist:
Glas/SnO₂ oder Si₃N₄:Al oder AlN/ZnO oder ZnO:Al/Ag/Ti oder NiCr/ZnO oder SnO₂/SiO₂ oder Al₂O₃ oder SiO₂:Al₂O₃/SnO₂ oder ZnO oder SnZnOₓ oder AlN oder Si₃N₄:Al oder (AlN/Si₃N₄:Al) oder (Si₃N₄:Al/AlN) oder (SnO₂/SnZnOₓ).

16. Substrat nach einem der vorhergehenden Ansprüche, **dadurch gekennzeichnet, dass** sein Emissionskoeffizient ε höchstens 0,05 beträgt.

17. Mehrscheiben-Isolierglas, insbesondere Zweischeiben-Isolierglas, das niedrig emittierend oder vor Sonne schützend ist und das Substrat nach einem der vorhergehenden Ansprüche umfasst, wobei sich der Aufbau aus den Schichten auf Position 2 und/oder 3 und gegebenenfalls auf Position 5 befindet.

18. Zweischeiben-Isolierglas, das niedrig emittierend ist und mindestens ein Substrat nach einem der Ansprüche 1 bis 16 umfasst, **dadurch gekennzeichnet, dass** sein Lichttransmissionsgrad, T_{L}, mindestens 72 % beträgt.

19. Zweischeiben-Isolierglas nach Anspruch 18, das zwei Glasscheiben umfasst, **dadurch gekennzeichnet, dass** seine Wärmedurchgangszahl k weniger als oder gleich 1,4 W/K·m², wenn die zwei Glasscheiben durch eine Luftfüllung voneinander getrennt sind, oder weniger als oder gleich 1,1 W/K·m², wenn die zwei Glasscheiben durch eine Argonfüllung voneinander getrennt sind, beträgt.
